# EUROPEAN PATENT SPECIFICATION

(11) **EP 2 689 896 B1**
(45) Date of publication and mention of the grant of the patent: **31.03.2021**
(21) Application number: 12760058.3
(22) Date of filing: 17.02.2012
(51) Int. Cl.: B05C 17/005, B05C 17/01, G01F 11/02, B25F 5/00, H01M 10/42, H02H 7/085, H02J 7/00

(54) **ELECTRIC TOOL**
ELEKTROWERKZEUG
OUTIL ÉLECTRIQUE

(30) Priority: 23.03.2011 JP 2011063659
(43) Date of publication of application: 29.01.2014
(73) Proprietor: Panasonic Intellectual Property Management Co., Ltd., Osaka-shi, Osaka 540-6207 (JP)
(72) Inventor: IWAMURA, Norihiro, Osaka 540-6207 (JP); MUTO, Motoharu, Osaka 540-6207 (JP)
(74) Representative: Appelt, Christian W.
(86) International application number: PCT/JP2012/053789
(87) International publication number: WO 2012/127950

(56) References cited:
- EP-A1- 1 825 964
- EP-A2- 2 015 421
- WO-A1-2007/067352
- JP-A- 7 099 721
- JP-A- 63 103 623
- JP-A- 2001 252 602
- US-A1- 2007 069 672
- US-A1- 2010 084 150

## Description

### TECHNICAL FIELD

The invention relates to an electric tool that is configured to forcibly deactivate a motor when an electric current exceeds a threshold.

### BACKGROUND ART

With regard to an electric tool, there has been proposed to provide a function of detecting a situation in which an electric current exceeds a threshold and then forcibly deactivating a motor, in order to prevent an excess current from flowing through a motor. With regard to this, Japanese Patent Application Publication No.H1-311887 describes such an electric tool that is configured, after forcible deactivation of a motor, to maintain this forcible deactivation while an operation switch is depressed by a user; and to cancel this forcible deactivation when the operation switch is released from being depressed (cf. also JP2001252602 and US2007/069672).

The conventional electric tool described above requires to release the operation switch from being depressed by releasing one's finger therefrom, in order to cancel the forcible deactivation of the motor. Therefore, in the case of performing a work which frequently causes an excess current flowing through a motor, the user is required to release one's finger from the operation switch and then depress the operation switch again whenever the motor is forcibly deactivated. This requirement deteriorates the work efficiency.

US 2010/0084150 A1 describes an electric power tool including a tool body and a battery pack. An over-current determination unit of the battery pack determines whether or not a magnitude of an electric current flowing from the battery pack to the tool body is greater than a predetermined current value. If so, a permission determination unit can be set so as not to permit supply of electric power from the battery pack to a drive portion when the magnitude of the electric current flowing from the battery pack to the tool body is greater than the predetermined current value. In this way an excessive electric current flowing from the battery pack to the tool body can be inhibited, however, this document does not disclose two cancel conditions.

EP 1 825 964 A1 describes an electric power tool including a motor; a battery unit for supplying an electric power for driving the motor; a manipulation unit for receiving input data including a rotation number and an on/off manipulation of the motor; and a motor control unit for controlling the motor based on the input data from the manipulation unit. In a limited operation mode due to an abnormal state, a rotation of the motor is stopped or suppressed. A load detector detects a load of the motor, and the motor control unit stops the motor if a load value detected by the load detector while being operated in the limited operation mode exceeds a specific reference value for a specific period of time.

EP 2 015 421 A2 describes a reset mechanism for a battery pack. A battery pack may include functionality to protect against fault conditions inside and outside the battery pack. The battery pack may be configured to shutdown or reduce current flow when subjected to adverse conditions. Further, a reset mechanism may be provided to guard against unexpected startup of a device powered by the battery pack after a shutdown event. The reset mechanism may require user interaction to ensure that resetting the battery pack after a shutdown event is done intentionally.

### DISCLOSURE OF INVENTION

The invention is developed in view of above problem, and it is an object of the invention to provide an electric tool capable of securing safety by forcibly deactivating a motor when an electric current exceeds a threshold, while suppressing deterioration of the work efficiency.

In order to resolve the above problem, an electric tool of the present disclosure includes: a motor as a drive source of the electric tool; a main switch for switching ON or OFF of electricity supply to the motor; a current detection means for detecting a value of a current flowing through the motor; an output adjustment switch for adjusting a rotational output of the motor; and a control means configured to forcibly deactivate the motor when a detection result by the current detection means exceeds a predetermined threshold. The control means has: a first cancel condition that the main switch is switched off under a forcible deactivation state; and a second cancel condition that the output adjustment switch is manipulated under the forcible deactivation state, where the forcible deactivation state is a state that the control means is set to forcibly deactivate the motor. The control means is configured to cancel the forcible deactivation state when the first or second cancel condition is satisfied.

In other words, an electric tool of the present disclosure includes: a motor as a drive source of the electric tool; a main switch for switching ON or OFF of electricity supply to the motor; a current detection means for detecting a value of a current flowing through the motor; an output adjustment switch for adjusting a rotational output of the motor; and a control means configured to forcibly deactivate the motor when a detection result by the current detection means exceeds a predetermined threshold. The control means has: a first cancel condition that the main switch is switched off under the condition of forcibly deactivating the motor; and a second cancel condition that the output adjustment switch is manipulated under the condition of forcibly deactivating the motor. The control means is configured to cancel the forcible deactivation of the motor when the first or second cancel condition is satisfied.

It is preferable that the main switch is configured to switch on the electricity supply to the motor according to a depressed operation, and the first cancel condition is a condition that the main switch under the forcible deactivation state is released from being depressed.

In other words, it is preferable that the main switch is configured to switch on the electricity supply to the motor according to a depressed operation, and the first cancel condition is a condition that the main switch is released from being depressed under a condition where the control means forcibly deactivates the motor.

It is preferable that the second cancel condition contains a condition that the output adjustment switch is manipulated more than a prescribed amount under the forcible deactivation state.

In other words, it is preferable that the second cancel condition contains a condition that the output adjustment switch is manipulated more than a prescribed amount under a condition where the control means forcibly deactivates the motor.

It is preferable that the second cancel condition contains a condition that the output adjustment switch is manipulated within a predetermined time from a start point of the forcible deactivation state.

In other words, it is preferable that the second cancel condition contains a condition that the output adjustment switch is manipulated within a predetermined time from a point in time when the motor is deactivated by the control means.

It is preferable that the control means is configured to change the threshold to another threshold higher than this threshold after the forcible deactivation state is canceled as a result of the satisfaction of the second cancel condition.

In other words, it is preferable that the control means is configured to change the threshold to another threshold higher than this threshold after the control means canceling the forcible deactivation of the motor as a result of the satisfaction of the second cancel condition.

It is preferable that the electric tool further includes a switching means for regulating a rotation of the motor. The control means is configured to control the switching means based on a value of the rotational output adjusted by the output adjustment switch. The control means is configured to turn off the switching means when a value of the current detected by the current detection means exceeds the predetermined threshold, thereby forcibly deactivating the motor.

The invention has an effect of securing safety by forcibly deactivating a motor when an electric current exceeds a threshold, while suppressing deterioration of the work efficiency.

### BRIEF DESCRIPTION OF DRAWINGS

FIG. 1 is a side view of an electric tool according to an embodiment of the invention;
FIG. 2 is a circuit diagram of the electric tool of the embodiment; and
FIG. 3 is a timing chart showing operations and signals of the electric tool of the embodiment.

### DESCRIPTION OF EMBODIMENTS

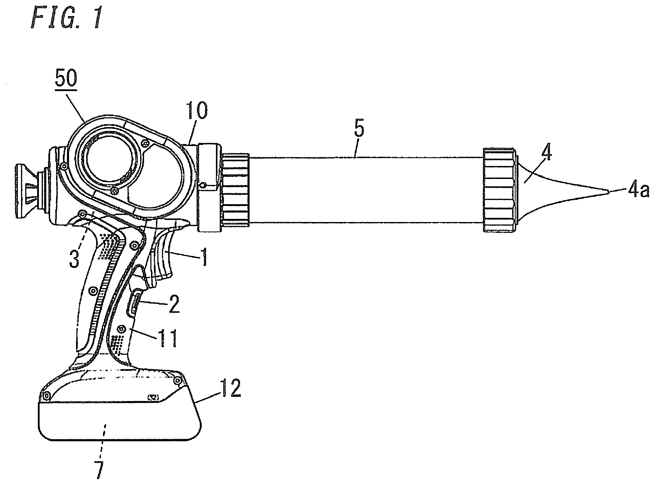

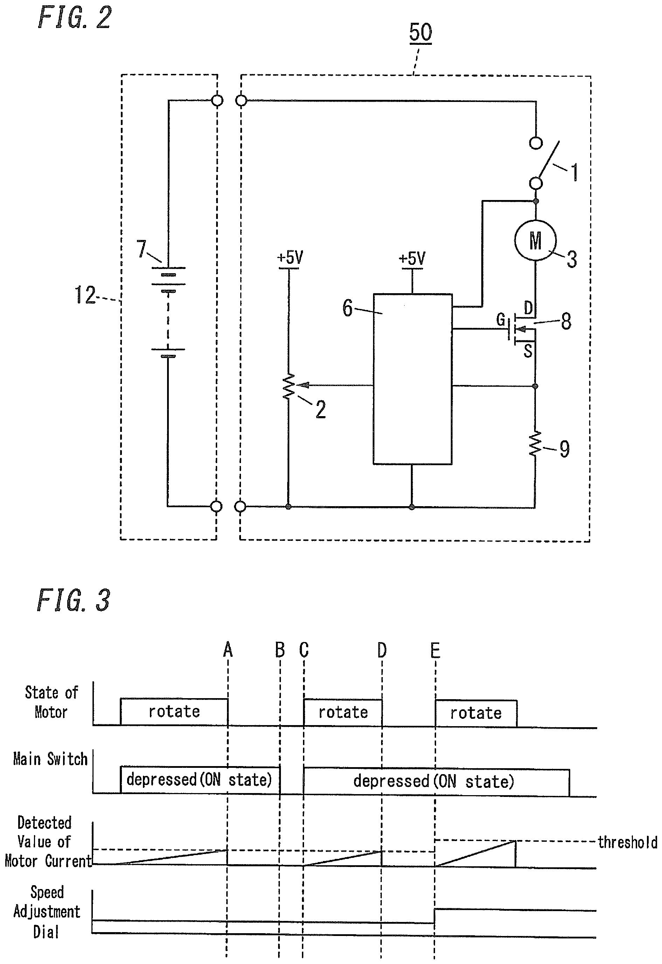

The present invention is described based on an embodiment illustrated in attached drawings. FIG. 1 is a side view of an electric tool according to an embodiment of the invention. FIG. 2 is a circuit diagram of the electric tool.

The electric tool of the embodiment is a portable sealing gun (caulk gun) 50 that includes a main switch 1 and an output adjustment switch 2. The sealing gun 50 has a main body 10 shaped like a cylinder in which a motor 3 as a drive source for the tool is put. A handle 11 is formed to extend from the main body 10 toward outside (toward lower side in FIG. 1) in the radial direction. The handle 11 is provided with the main switch 1 of a trigger switch and the output adjustment switch 2 of a speed adjustment dial. In the electric tool of the embodiment, the main switch 1 is constituted by a switch of a trigger type. The main switch 1 is configured to switch on the electricity supply to the motor 3 according to a depressed operation, and also to switch off the electricity supply to the motor 3 when it is released from being depressed. Note that the main switch 1 is not limited to a switch of the trigger type, and may be a switch of a button type or a slide type.

A barrel 5 shaped like a hollow cylinder with a nozzle 4 at a tip thereof is attached to the main body 10. A bar-shaped rod (not shown) is disposed within the barrel 5. A push member (not shown) shaped like a substantially circular plate is fixed at an end of the rod such that the push member makes a sliding contact with an inner surface of the barrel 5. The rod moves in the axial direction thereof though a drive power of the motor 3 in the main body 10, and thereby sealing agent in the barrel 5 is pushed by the push member at the tip of the rod, and is ejected through a discharge hole 4a of the tip of the nozzle 4.

A battery pack 12 is detachably attached to an end (lower end in FIG. 1) of the handle 11. Secondary cells 7 as a power source of the sealing gun 50 are housed in the battery pack 12. The secondary cells 7 supply electricity to the motor 3, a control means 6, and the like in the sealing gun 50. The control means 6 controls a rotation of the motor 3 according to input signals from the main switch 1 and output adjustment switch 2.

As shown in the circuit diagram of FIG. 2, in a circuit for supplying electricity from the secondary cells 7 to the motor 3, the motor 3 is connected in series with: a switching means 8 constituted by an switching element of an FET; and a current detection means 9 constituted by a current detection resistor. The control means 6 controls electricity supply to the motor 3 by means of the switching means 8. In addition, the control means 6 detects a value of a current flowing through the motor 3 on the basis of a voltage induced across the current detection means 9.

In the sealing gun 50 having above-described configuration, the electricity supply to the motor 3 is switched on when the main switch 1 is depressed more than a predetermined amount (i.e., when the main switch 1 is turned on). The electricity supply to the motor 3 is switched off when the main switch 1 is released from being depressed (i.e., when the main switch 1 is turned off). The control means 6 is configured to drive the switching means 8 on the basis of PWM control in which duty ratio is changed depending on a voltage value that is associated with a rotation position of the output adjustment switch 2. Rotation speed of the motor 3 is thereby adjusted.

The control means 6 is configured to detect a value of a current flowing through the motor 3 by the current detection means 9. The control means 6 is configured to forcibly deactivate the motor 3 by turning off the switching means 8 when a detected result (detected current) exceeds a predetermined threshold even with the main switch 1 depressed. The threshold changes depending on a rotation position of the dial (i.e., set value of motor output) of the output adjustment switch 2. For example, the control means 6 may include a threshold table in which set values of motor output (selectable by the output adjustment switch 2) are associated with respective thresholds (thresholds compared with the detected current) for forcibly deactivating the motor 3. In this configuration, the control means 6 determines, with referring the threshold table, a threshold that corresponds to a rotation position of the dial (i.e., set value of motor output) of the output adjustment switch 2. Note that, the threshold for forcibly deactivating the motor 3 may be a constant value regardless of the set value of output of the motor 3.

In the sealing gun 50 of the embodiment, there are two ways for restarting the work by canceling a forcible deactivation state after transition to the forcible deactivation state of the motor 3.

One of the two ways is a method of releasing the main switch 1 from being depressed. When the main switch 1 is turned off under the forcible deactivation state of the motor 3, the control means 6 detects this through a change in an electric signal, and then promptly cancels the forcible deactivation state of the motor 3. After then, when the main switch 1 is depressed, the motor 3 starts the rotation again at a point in time when the depressed amount of the main switch 1 exceeds the predetermined amount (to turn on the main switch 1).

The other of the two ways is a method of manipulating the output adjustment switch 2. When the output adjustment switch 2 is rotated more than a prescribed amount under the forcible deactivation state of the motor 3, the control means 6 detects this through a change in an electric signal, and then cancels the forcible deactivation state of the motor 3. In this case, the motor 3 immediately restarts the rotation, because the main switch 1 is depressed (in an ON state).

Note that, the embodiment is configured, if a predetermined time elapses after the motor 3 is forcibly deactivated, to be restored from the forcible deactivation state only through the method of the main switch 1, i.e., not to be restored through the method of the output adjustment switch 2.

Described in other words, the control means 6 of the embodiment has a first cancel condition and a second cancel condition as a cancel condition for canceling the forcible deactivation state of the motor 3, and is configured to cancel the OFF state of the switching means 8 when any one of the cancel conditions is satisfied (note that, the control means 6 maintains the forcible deactivation state if none of the cancel conditions is satisfied after the transition to the forcible deactivation state). The first cancel condition is a condition that the main switch 1 is released from being depressed under the forcible deactivation state. The second cancel condition is a condition that the output adjustment switch 2 is manipulated more than a prescribed amount within a predetermined time from a start point of the forcible deactivation state. When detecting that any of the first cancel condition and the second cancel condition is satisfied (through e.g., detection of an electric signal), the control means 6 cancels the OFF state of the switching means 8 thereby cancelling the forcible deactivation state.

The control means 6 of the embodiment is configured to, after being restored from the forcible deactivation state as a result of manipulation of the output adjustment switch 2, change "the threshold compared with detected current" to a new threshold (second threshold), which is higher than a previous threshold (first threshold) that has been used before the motor 3 is forcibly deactivated, for a predetermined period after the restoration.

That is, the control means 6 includes a first threshold value and a second threshold value which is larger than the first threshold value. In an initial state, the control means 6 is set to use the first threshold value as "a threshold compared with detected current" for forcibly deactivating the motor 3. When a current which is detected through the current detection means 9 exceeds the first threshold value, the control means 6 forcibly deactivates the motor 3. If the forcible deactivation state is canceled as a result of the satisfaction of the second cancel condition, the control means 6 changes the threshold, which is compared with detected current, from the first threshold value to the second threshold value.

With regard to the threshold compared with the detected current, the control means 6 may be configured to, after changing the threshold to the second threshold value, reinstate the threshold to the first threshold value when the main switch 1 is turned off.

With regard to the threshold compared with the detected current, the control means 6 may be configured to, after changing the threshold to the second threshold value, reinstate the threshold to the first threshold value when a predetermined time elapses from a point in time of turning off the main switch 1 (in other words, the control means 6 may be configured to maintain the threshold at the second threshold value, if the main switch 1 is turned on again within the predetermined time from the point in time of turning off the main switch 1).

FIG. 3 shows an example of an operation of the sealing gun 50 and various signals thereof. In this example, at the point "A", a current flowing through the motor 3 reaches a threshold for prevention of excess load. At this point, the motor 3 is forcibly deactivated by the control means 6, although the main switch 1 is depressed (i.e., the main switch 1 is in an ON state). Then, at the point "B", the main switch 1 is released from being depressed. At this point, the control means 6 detects this, and then cancels the forcible deactivation of the motor 3. Then, at the point "C", the motor 3 starts the rotation again at a point in time when the main switch 1 is depressed (i.e., when the main switch 1 is turned on).

Then, at the point "D", a current flowing through the motor 3 reaches the threshold again. At this point, the motor 3 is forcibly deactivated by the control means 6 with the main switch 1 kept depressed (i.e., with the main switch 1 kept in an ON state). Then, at the point "E", the output adjustment switch (speed adjustment dial) 2 is manipulated while the main switch 1 is kept depressed. At this point, the control means 6 detects this, and then cancels the forcible deactivation of the motor 3, thereby promptly restarting the motor 3 to rotate. The threshold of current is then changed to another higher threshold (second threshold) as a result of the cancellation of the forcible deactivation at this point.

As described above, the electric tool (sealing gun 50) of the embodiment of the invention includes: the motor 3 as a drive source of the electric tool; the main switch 1 for switching ON or OFF of electricity supply to the motor 3; the current detection means 9 for detecting a value of a current flowing through the motor 3; the output adjustment switch 2 for adjusting a rotational output of the motor 3; and the control means 6 configured to forcibly deactivate the motor 3 when a detection result by the current detection means 9 exceeds a predetermined threshold. The control means 6 has: a first cancel condition that the main switch 1 is switched off under a forcible deactivation state; and a second cancel condition that the output adjustment switch 2 is manipulated under the forcible deactivation state. The forcible deactivation state is a state that the control means 6 is set to forcibly deactivate the motor 3. The control means 6 is configured to cancel the forcible deactivation state when the first or second cancel condition is satisfied.

In detail, in the electric tool of the embodiment of the invention, the main switch 1 is configured to switch on the electricity supply to the motor 3 according to a depressed operation. The first cancel condition is a condition that the main switch 1 under the forcible deactivation state is released from being depressed.

According to this configuration, when the motor 3 is forcibly deactivated, in order to restore from the forcible deactivation state, a user can select releasing the main switch 1 or manipulating the output adjustment switch 2 while keeping the main switch 1 depressed, depending on a situation. Especially, in case of performing a work in which the forcible deactivation for preventing excess current occurs with relatively high frequency, such as the work using the sealing gun 50, it is possible to significantly improve the work efficiency, since the work can be continued with keeping the main switch 1 depressed. That is, it is possible to improve the work efficiency, since it is unnecessary to turn off and then on the main switch 1 whenever the motor 3 is forcibly deactivated.

In the embodiment, the second condition includes a condition that the output adjustment switch 2 is manipulated more than a prescribed amount under the forcible deactivation state.

According to this configuration, since the output adjustment switch 2 is required to be manipulated more than the prescribed amount for cancelling the forcibly deactivation state, it is possible to prevent a situation of being recovered from the forcibly deactivation state at an unintended timing of a user. For example, even if the output switch 2 is operated at an unintended timing due to e.g., a contact against a wall, the forcible deactivation state is less likely to be cancelled. Accordingly, it is possible to improve safety and convenience of the tool.

In the embodiment, the second cancel condition includes a condition that the output adjustment switch 2 is manipulated within a predetermined time from a start point of the forcible deactivation state.

Thus, if a continuous work is not performed, only the main switch 1 serves as a restoration means. Accordingly, it is possible to suppress a situation that the forcible deactivation state is restored due to an inadvertent manipulation of the output adjustment switch 2.

In the embodiment, the control means **6** is configured to change the threshold (first threshold) to another threshold (second threshold) higher than this threshold after the forcible deactivation state is canceled as a result of the satisfaction of the second cancel condition.

According to this configuration, it is possible to suppress frequent occurrence of forcible deactivation of the motor **3** in a continuous work. As a result, it is possible to improve the work efficiency.

Although the invention has been described with reference to certain preferred embodiments, numerous modifications and variations can be made by those skilled in the art without departing from the scope of this invention as defined by the attached claims.

## Claims

1. An electric tool comprising:
a motor (3) as a drive source of the electric tool;
a main switch (1) for switching ON or OFF of electricity supply to the motor (3);
a current detection means (9) for detecting a value of a current flowing through the motor (3); and
a control means (6) configured to be set to a forcible deactivation state, being a state that the control means (6) is set to forcibly deactivate the motor (3), when a detection result by the current detection means (9) exceeds a predetermined threshold,
whereby
the control means (6) has a first cancel condition that the main switch (1) is switched off under the forcible deactivation state, the electric tool further comprises an output adjustment switch (2) for adjusting a rotational output of the motor (3);
the control means (6) has a second cancel condition that the output adjustment switch (2) is manipulated while the main switch (1) is kept ON under the forcible deactivation state, and
the control means (6) is configured to cancel the forcible deactivation state when the first or second cancel condition is satisfied.

2. The electric tool as set forth in claim 1, wherein:
the main switch (1) is configured to switch on the electricity supply to the motor (3) according to a depressed operation,
the first cancel condition is a condition that the main switch (1) under the forcible deactivation state is released from being depressed, and
the second cancel condition is a condition that the output adjustment switch (2) is manipulated while the main switch (1) is kept depressed under the forcible deactivation state.

3. The electric tool as set forth in claim 1 or 2, wherein the second cancel condition comprises a condition that the output adjustment switch (2) is manipulated more than a prescribed amount under the forcible deactivation state.

4. The electric tool as set forth in any one claims of 1 to 3, wherein the second cancel condition comprises a condition that the output adjustment switch (2) is manipulated within a predetermined time from a start point of the forcible deactivation state.

5. The electric tool as set forth in any one claims of 1 to 4, wherein the control means (6) is configured to change the threshold to another threshold higher than this threshold after the forcible deactivation state is canceled as a result of the satisfaction of the second cancel condition.

6. The electric tool as set forth in claim 1, further comprising a switching means (8) for regulating a rotation of the motor (3), wherein:
the control means (6) is configured to control the switching means (8) based on a value of the rotational output adjusted by the output adjustment switch (2), and
the control means (6) is configured to turn off the switching means (8) when a value of the current detected by the current detection means (9) exceeds the predetermined threshold, thereby forcibly deactivating the motor (3).

## Patentansprüche

1. Elektrowerkzeug, aufweisend:
einen Motor (3) als eine Antriebsquelle des Elektrowerkzeugs;
einen Hauptschalter (1) zum Ein- oder Ausschalten der Stromzufuhr zu dem Motor (3);
ein Stromerfassungsmittel (9) zum Erfassen eines Wertes eines Stroms, der durch den Motor (3) fließt; und
ein Steuermittel (6), das konfiguriert ist, um in einen erzwungenen Deaktivierungszustand versetzt zu werden, der ein Zustand ist, in dem das Steuermittel (6) eingestellt ist, um den Motor (3) erzwungen zu deaktivieren, wenn ein Erfassungsergebnis von dem Stromerfassungsmittel (9) einen vorbestimmten Schwellenwert überschreitet,
wobei
das Steuermittel (6) eine erste Aufhebungsbedingung hat, dass der Hauptschalter (1) in dem erzwungenen Deaktivierungszustand ausgeschaltet ist, das Elektrowerkzeug ferner einen Ausgabeeinstellschalter (2) zum Einstellen einer Drehausgabe des Motors (3) aufweist;
das Steuermittel (6) eine zweite Aufhebungsbedingung hat, dass der Ausgabeeinstellschalter (2) betätigt wird, während der Hauptschalter (1) in dem erzwungenen Deaktivierungszustand auf EIN gehalten wird, und
das Steuermittel (6) konfiguriert ist, um den erzwungenen Deaktivierungszustand aufzuheben, wenn die erste oder zweite Aufhebungsbedingung erfüllt ist.

2. Elektrowerkzeug nach Anspruch 1, wobei:
der Hauptschalter (1) konfiguriert ist, um die Stromzufuhr zu dem Motor (3) entsprechend einer gedrückten Betätigung einzuschalten,
die erste Aufhebungsbedingung eine Bedingung ist, dass der Hauptschalter (1) in dem erzwungenen Deaktivierungszustand aus dem gedrückten Zustand freigegeben wird, und
die zweite Aufhebungsbedingung eine Bedingung ist, dass der Ausgabeeinstellschalter (2) betätigt wird, während der Hauptschalter (1) unter dem erzwungenen Deaktivierungszustand gedrückt gehalten wird.

3. Elektrowerkzeug nach Anspruch 1 oder 2, wobei die zweite Aufhebungsbedingung eine Bedingung umfasst, dass der Ausgabeeinstellschalter (2) in dem erzwungenen Deaktivierungszustand um mehr als ein vorgeschriebenes Maß betätigt wird.

4. Elektrowerkzeug nach einem der Ansprüche 1 bis 3, wobei die zweite Aufhebungsbedingung eine Bedingung umfasst, dass der Ausgabeeinstellschalter (2) ab einem Startpunkt des erzwungenen Deaktivierungszustands innerhalb einer vorbestimmten Zeit betätigt wird.

5. Elektrowerkzeug nach einem der Ansprüche 1 bis 4, wobei das Steuermittel (6) konfiguriert ist, um den Schwellenwert auf einen anderen Schwellenwert zu ändern, der höher als dieser Schwellenwert ist, nachdem der erzwungene Deaktivierungszustand als ein Ergebnis der Erfüllung der zweiten Aufhebungsbedingung aufgehoben wurde.

6. Elektrowerkzeug nach Anspruch 1, ferner ein Schaltmittel (8) zum Regeln einer Drehung des Motors (3) aufweisend, wobei:
das Steuermittel (6) konfiguriert ist, um das Schaltmittel (8) auf der Grundlage eines Wertes der Drehausgabe zu steuern, die durch den Ausgabeeinstellschalter (2) eingestellt ist, und
das Steuermittel (6) konfiguriert ist, um das Schaltmittel (8) auszuschalten, wenn ein Wert des Stroms, der von dem Stromerfassungsmittel (9) erfasst ist, den vorbestimmten Schwellenwert überschreitet, so dass dadurch der Motor (3) erzwungen deaktiviert wird.

## Revendications

1. Outil électrique comprenant :
un moteur (3) en tant que source d'entraînement de l'outil électrique ;
un commutateur principal (1) destiné à mettre sous tension ou hors tension l'alimentation en électricité du moteur (3) ;
un moyen de détection de courant (9) destiné à détecter une valeur d'un courant passant à travers le moteur (3) ; et
un moyen de commande (6) conçu pour être réglé à un état de désactivation forcée, étant un état dans lequel le moyen de commande (6) est réglé pour désactiver de force le moteur (3), lorsqu'un résultat de détection par le moyen de détection de courant (9) dépasse un seuil prédéterminé,
moyennant quoi
le moyen de commande (6) a une première condition d'annulation dans laquelle le commutateur principal (1) est mis hors tension dans l'état de désactivation forcée, l'outil électrique comprend en outre un commutateur d'ajustement de sortie (2) pour ajuster une sortie de rotation du moteur (3) ;
le moyen de commande (6) a une seconde condition d'annulation dans laquelle le commutateur d'ajustement de sortie (2) est manipulé alors que le commutateur principal (1) est maintenu sous tension dans l'état de désactivation forcée, et
le moyen de commande (6) est conçu pour annuler l'état de désactivation forcée lorsque la première ou la seconde condition d'annulation est satisfaite.

2. Outil électrique selon la revendication 1, dans lequel :
le commutateur principal (1) est conçu pour mettre sous tension l'alimentation en électricité du moteur (3) selon une opération d'enfoncement,
la première condition d'annulation est une condition dans laquelle le commutateur principal (1) dans l'état de désactivation forcée est relâché après avoir été enfoncé, et
la seconde condition d'annulation est une condition dans laquelle le commutateur d'ajustement de sortie (2) est manipulé alors que le commutateur principal (1) est maintenu enfoncé dans l'état de désactivation forcée.

3. Outil électrique selon la revendication 1 ou 2, dans lequel la seconde condition d'annulation comprend une condition dans laquelle le commutateur d'ajustement de sortie (2) est manipulé de plus d'une quantité prédéfinie dans l'état de désactivation forcée.

4. Outil électrique selon l'une quelconque des revendications 1 à 3, dans lequel la seconde condition d'annulation comprend une condition dans laquelle le commutateur d'ajustement de sortie (2) est manipulé dans un temps prédéterminé à partir d'un point de départ de l'état de désactivation forcée.

5. Outil électrique selon l'une quelconque des revendications 1 à 4, dans lequel le moyen de commande (6) est conçu pour modifier le seuil en un autre seuil plus élevé que ce seuil une fois que l'état de désactivation forcée est annulé en résultat de la satisfaction de la seconde condition d'annulation.

6. Outil électrique selon la revendication 1, comprenant en outre un moyen de commutation (8) pour réguler une rotation du moteur (3), dans lequel :
le moyen de commande (6) est conçu pour commander le moyen de commutation (8) sur la base d'une valeur de la sortie de rotation ajustée par le commutateur d'ajustement de sortie (2), et
le moyen de commande (6) est conçu pour couper le moyen de commutation (8) lorsqu'une valeur du courant détecté par le moyen de détection de courant (9) dépasse le seuil prédéterminé, désactivant ainsi de force le moteur (3).
